# EUROPEAN PATENT APPLICATION

(11) **EP 4 019 180 A1**
(43) Date of publication of application: **29.06.2022**
(21) Application number: 20854796.8
(22) Date of filing: 14.08.2020
(51) Int. Cl.: B23K 20/12

(54) **COUPLING JOINT, AUTOMOBILE MEMBER, AND METHOD FOR MANUFACTURING COUPLING JOINT**

(30) Priority: 20.08.2019 JP 2019150448
(71) Applicant: NIPPON STEEL CORPORATION, Chiyoda-ku Tokyo 100-8071 (JP)
(72) Inventor: MATSUI, Sho, Tokyo 100-8071 (JP); KODAMA, Shinji, Tokyo 100-8071 (JP); YOSHINAGA, Chisato, Tokyo 100-8071 (JP)
(74) Representative: Vossius & Partner Patentanwälte Rechtsanwälte mbB
(86) International application number: PCT/JP2020/030906
(87) International publication number: WO 2021/033647

(57) **Abstract**

A joint, an automobile member, and a method of manufacture of joint able to keep crack from occurring in the vicinity of a friction welded surface, the joint according to one aspect of the present invention comprising a first steel material having a shaft part, a second steel material with an amount of carbon at an inside from the surface by 0.2 mm or more of 0.25 mass% or more and having the shaft part press-fit into it, and a friction welded surface comprised of the shaft part and the second steel material jointed together, wherein the second steel material has a plastically deformed part contiguous with the friction welded surface, the plastically deformed part has a extruded part projecting out toward an outside of the second steel material, and a Vickers hardness of a base part of the extruded part, measured at a plane vertical to the friction welded surface and including a center of the friction welded surface, is 600 HV or less.

## Description

### FIELD

The present invention relates to a joint, automobile member, and method of manufacture of a joint.

### BACKGROUND

As one of the methods for joining members to manufacture a joint, friction welding is known. Friction welding is the art of making members rub against each other while pressing them together to thereby join the members in a solid phase state. The members are made to rub against each other, for example, by making the pressing surface of one of the members a rotationally symmetric shape (for example a circular shape or polygonal shape) and making this rotate at a high speed.

One of the features of friction welding is the point of lack of melting or stirring of the members at the jointed part. Welding is the method of joining which makes members melt and resolidify to form a jointed part. Friction stir welding is a method of joining which makes a press-fitting member rotate at a high speed to stir the contact part of the members to thereby form a jointed part. Therefore, in a jointed part of a joint formed by welding or friction stir welding, the members are mixed with each other. On the other hand, in a joint formed by friction welding, there is either no region where the members are mixed with each other or else it is extremely small. If examining a cross-section of a jointed part of a joint formed by friction welding, the state where the members are split by the friction welded surface can be discerned. For example, PTL 1 and PTL 2 etc. disclose the method of friction welding.

### [CITATIONS LIST]

### [PATENT LITERATURE]

[PTL 1] Japanese Unexamined Patent Publication No. 2006-297398
[PTL 2] Japanese Unexamined Patent Publication No. 2004-141933

### SUMMARY

### [TECHNICAL PROBLEM]

Friction welding enables different types of metal members to be easily jointed, so has been spreading in range of application in recent years. On the other hand, the inventors discovered the phenomenon of joint strength becoming hard to secure if applying friction welding to high carbon steel members. The inventors studied this and as a result discovered that crack easily occurred at the friction welded part of the steel members and that this crack caused the joint strength to fall.

What should be noted here is the point that the above-mentioned crack occurred at joints to which no such external force was applied after the end of the friction welding. It was surmised that this crack was not caused by external force applied to the joint, but naturally occurred. There is no example of study of such a problem of crack.

For example, in the above-mentioned PTL 1, a method of striking the surface of a jointed part of a product obtained by friction welding members made of steel materials by an ultrasonic vibrator vibrating by a frequency of 10 to 60 kHz and amplitude of 0.3 to 50 µm to reduce the step differences and burrs at the jointed part and thereby ease stress concentration at the jointed part is disclosed. However, PTL 1 relates to a friction welded part excellent in fatigue resistance characteristics and a method of improving the fatigue characteristics. Only suppression of fatigue fracture starting from burrs is considered. That is, occurrence of crack before stress causing fatigue fracture is applied to a joint is not studied at all in PTL 1.

In PTL 2, a method of friction welding a propeller shaft comprising arranging a thin-walled pipe and a thick-walled pipe coaxially, making their end faces abut, and rotating them relatively to generate heat of friction by which the two end faces are pressure welded, in which method of friction welding a propeller shaft an inside diameter of the thin-walled pipe is made smaller than an inside diameter of the thick-walled pipe, is disclosed. However, PTL 2 also has fatigue fracture as the technical problem of the invention. Only suppression of fatigue fracture starting from burrs is considered.

In consideration of the above situation, the present invention has as its technical problem the provision of a joint, automobile member, and method of manufacture of a joint able to keep crack from occurrence in the vicinity of a friction welded surface.

### [SOLUTION TO PROBLEM]

The gist of the present invention is as follows:
(1) A joint comprising a first steel material having a shaft part, a second steel material with an amount of carbon at an inside from the surface by 0.2 mm or more of 0.25 mass% or more and having the shaft part press-fit into the second steel material, and a friction welded surface, the shaft part and the second steel material being jointed via the friction welded surface, the second steel material having a plastically deformed part contiguous with the friction welded surface, the plastically deformed part having a projecting part projecting out toward an outside of the second steel material, a Vickers hardness of a base part of the projecting part, measured at a plane vertical to the friction welded surface and including a center of the friction welded surface, being 600 HV or less.
(2) The joint according to (1), wherein a cross-section of the shaft part vertical to an axial direction is a rotationally symmetric shape.
(3) The joint according to (1), wherein a cross-section of the shaft part vertical to an axial direction is a circular shape or a regular polygonal shape.
(4) The joint according to any one of (1) to (3), wherein the second steel material has a hard part with a Vickers hardness of 896C³ -2232C² +2175C+138 (HV) or more in the vicinity of the **friction welded surface in a depth direction, wherein "C" (mass%) means an amount of carbon at** 0.2 mm or more inside from the surface.
(5) The joint according to any one of (1) to (4), wherein a maximum value of an amount of carbon in a region from the surface of the second steel material to a depth of 45 µm is less than 0.25 mass%.
(6) The joint according to any one of (1) to (5), wherein a Vickers hardness of a surface layer of the second steel material is 15% or more lower than a Vickers hardness of an inside part.
(7) The joint according to any one of (1) to (6), wherein the second steel material is a steel sheet.
(8) The joint according to any one of (1) to (7), wherein the first steel material has a head part with a cross-sectional diameter larger than the shaft part, the joint further comprises a third member provided between the head part and the second steel material, the shaft part of the first steel material passes through the third member, and the third member is gripped between the head part of the first steel material and a joining surface of the second steel material.
(9) An automobile member comprising the joint according to any one of (1) to (8).
(10) A method of production of a joint comprising a step of decarburizing a surface layer of a second steel material with an amount of carbon at an inside from the surface by 0.2 mm or more of 0.25 mass% or more, and a step of pressing a shaft part of a first steel material against the decarburized second steel material while making the first steel material rotate so as to form a friction welded surface.
(11) The method of production of a joint according to (10), wherein the first steel material has a head part with a cross-sectional diameter larger than the shaft part; and the method comprises, before forming the friction welded surface, a step of superposing a third member on the decarburized second steel material and a step of making the shaft part of the first steel material pass through the third member.

### [ADVANTAGEOUS EFFECTS OF INVENTION]

According to the present invention, it is possible to provide a joint, automobile member, and method of manufacture of a joint able to keep crack from occurring in the vicinity of a friction welded surface.

### BRIEF DESCRIPTION OF DRAWINGS

FIG. 1 is a cross-sectional view of one example of a joint according to a present embodiment.
FIG. 2 is an enlarged cross-sectional view of a vicinity of a extruded part of the joint.
FIG. 3 is a cross-sectional view of another example of a joint according to the present embodiment.
FIG. 4 is a view explaining a method of measurement of hardness of a base part of the extruded part.
FIG. 5 is a view explaining a method of detection of a hard part in the vicinity of a friction welded surface in the case where a shaft part of the first steel material is a hollow structure.

### DESCRIPTION OF EMBODIMENTS

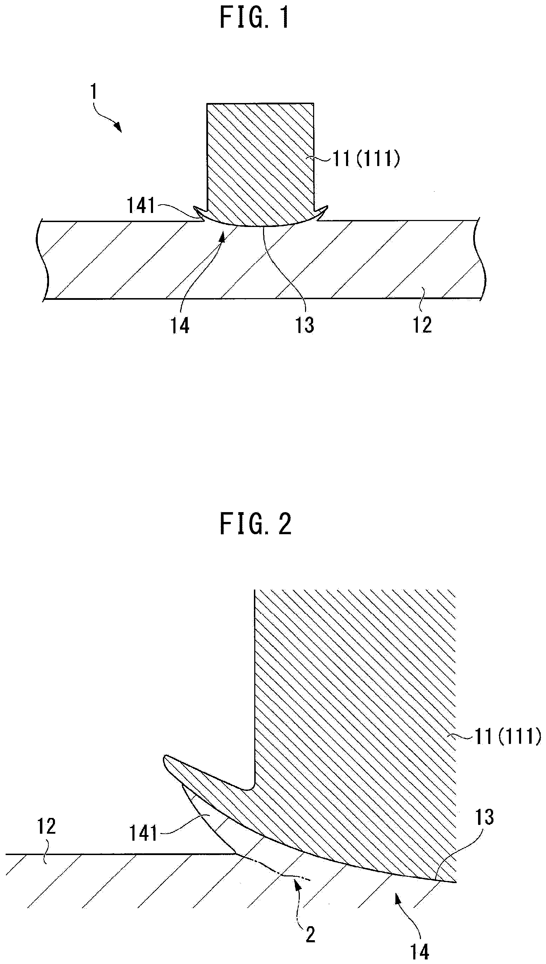

A cracking defect will be explained in detail while referring to FIG. 1 and FIG. 2. FIG. 1 is a schematic cross-sectional view of a joint 1 including a first steel material 11 having a shaft part 111, a second steel material 12 having an amount of carbon inside from the surface by 0.2 mm or more of 0.25 mass% or more and having the shaft part 111 press-fit in it, and a friction welded surface 13 joining the shaft part 111 and the second steel material 12. FIG. 2 is an enlarged cross-sectional view of the friction welded surface 13. The second steel material 12 has a plastically deformed part 14 formed contiguous with the friction welded surface 13 by the shaft part 111 of the first steel material 11 being press-fit into it. The plastically deformed part 14 has a extruded part 141 projecting out toward the outside of the second steel material 12.

The inventors examined the cross-sections of various joints and as a result learned that cracking defects occur starting from the base part of the extruded part 141. FIG. 2 shows a cracking defect 2 by a one-dot chain line.

The inventors thought that there was a possibility of hydrogen embrittlement occurring at the base part of the extruded part 141. Therefore, they measured the hardnesses of the base part of the extruded part 141 and its surroundings, whereupon they learned that the base part of the extruded part 141 is extremely high in hardness. Normally, hydrogen embrittlement is considered to occur more easily the higher the strength of the steel. The results of measurement of hardnesses mentioned above backed up the supposition that cracks at the base part of the extruded part 141 were due to hydrogen embrittlement.

Further, the inventors discovered that by lowering the Vickers hardness at the base part of the extruded part 141 to 600 HV or less, it is possible to keep crack from occurring at the base part of the extruded part 141 and thereby completed the present invention.

The joint 1 according to one aspect of the present invention is provided with a first steel material 11 having a shaft part 111, a second steel material 12 with an amount of carbon at an inside from the surface by 0.2 mm or more of 0.25 mass% or more and having the shaft part 111 press-fit into it, and a friction welded surface 13 comprised of the shaft part 111 and the second steel material 12 jointed together, wherein the second steel material 12 has a plastically deformed part 14 contiguous with the friction welded surface 13, the plastically deformed part 14 has a extruded part 141 projecting out toward an outside of the second steel material 12, and a Vickers hardness of a base part of the extruded part 141, measured at a plane vertical to the friction welded surface 13 and including a center of the friction welded surface 13, is 600 HV or less. Below, the joint according to the present embodiment will be explained in detail.

### First Steel Material 11

The first steel material 11 has the shaft part 111 to be jointed with the second steel material 12. The shaft part 111 has a shape enabling it to be jointed with the second steel material 12 by friction welding. For example, if the friction welding is performed by making the first steel material 11 rotate at a high speed while pressing the shaft part 111 against the second steel material 12, the outer shape of the shaft part 111 in the cross-section vertical to the axial direction is preferably a rotationally symmetric shape, for example, a circular shape (true circular shape, elliptical shape, etc.) or regular polygonal shape. Further, the shaft part 111 may be a hollow structure (for example, a cylindrical structure etc.) or may be a solid structure. The inner shape of the shaft part 111 in the cross-section vertical to the axial direction in the case where the shaft part 111 is a hollow structure is preferably a rotationally symmetric shape, for example, a circular shape (true circular shape, elliptical shape, etc.), or a regular polygonal shape.

Note that, the shaft part 111 is press-fit into the second steel material 12 and sometimes plastically deforms at that time. Therefore, in the joint 1, sometimes the front end of the shaft part 111 (vicinity of plastically deformed part 14) forms a plastically deformed part. In this embodiment, the plastically deformed part of this shaft part 111 is also deemed to be included in the shaft part 111. If the front end of the shaft part 111 is a plastically deformed part, the shaft part 111 with part forming a circular columnar or regular polygonal columnar shape is deemed the above-mentioned preferable shaft part 111.

The first steel material 11 may, furthermore, be provided with a head part 112 with a cross-sectional diameter (that is, maximum width in cross-section vertical to axial direction) larger than the shaft part 111. The head part 112 has the action of fastening the later explained third member 15. In this case, the first steel material 11 may be a rivet shape. The diameter of the head part 112 is preferably 1.5 times or more the diameter of the shaft part 111. Further, the length of the shaft part 111 in the axial direction is preferably 1.5 times or more the thickness of the third member 15. The diameter of the shaft part 111 is preferably, for example, less than 30 mm. Note that, the diameters of the shaft part 111 and head part 112 mean the diameters of their cross-sectional shapes if they are true circular shapes and mean the diameters of the circumscribing circles if they are circular shapes other than true circles or polygonal shapes. If the shaft part is cylindrical, the diameters of the shaft part 111 and head part 112 mean their outside diameters. On the other hand, the joint 1 need not include the third member 15. The first steel material 11 may also be a rod-shaped member comprised of only the shaft part 111.

### Second Steel Material 12

The second steel material 12 contains 0.25 mass% or more of carbon at an inside from the surface by 0.2 mm or more. For this reason, the joint 1 containing that second steel material 12 has a high strength and can be applied to various machine parts. The carbon content of the second steel material 12 may be 0.27 mass% or more, 0.29 mass% or more, 0.30 mass% or more, 0.32 mass% or more, or 0.35 mass% or more. The upper limit value of the carbon content of the second steel material 12 is not particularly prescribed, but, for example, may be made 0.60 mass% or less, 0.55 mass% or less, 0.50 mass% or less, or 0.45 mass% or less.

The second steel material 12 has the shaft part 111 of the first steel material 11 press-fit into it. Therefore, the press-fitting location of the shaft part 111 at the second steel material 12 is formed with a recessed plastically deformed part 14. At the outer circumference of the plastically deformed part 14, steel moved from the recessed part projects out. The shape of the recessed part is determined in accordance with the front end shape of the shaft part 111 before press-fitting. For example, if the front end shape of the shaft part 111 before press-fitting is conical or pyramidal, the cross-sectional shape of the recessed part after press-fitting becomes circular. On the other hand, if the front end of the shaft part 111 before press-fitting is flat, the cross-sectional shape of the recessed part after press-fitting becomes relatively flat at the bottom part. Whatever the case, the shape of the recessed part is not particularly limited.

The shape of the second steel material 12 is not particularly limited. For example, the second steel material 12 may be a steel sheet or may be a circular rod or angular rod. Further, the second steel material 12 may also be a plated steel material or coated steel material or other surface-treated steel material. Note that, since the second steel material 12 has the shaft part 111 of the first steel material 11 press-fit into it, at the time of friction welding, the area of the abutting surface of the second steel material 12 (surface abutting against the first steel material 11) is usually larger than the area of the abutting surface of the first steel material 11 (surface abutting against the second steel material 12).

### Friction Welded Surface 13

The friction welded surface 13 is the interface between the shaft part 111 of the first steel material 11 and the second steel material 12. It can be clearly confirmed by examining the cross-section of the jointed part. At the friction welded surface, it is said that the materials are strongly jointed by the interatomic attraction. This is considered to be due to the fact that at the time of friction welding, the heat of friction causes softening and a fall in the deformation resistance in the two materials resulting in the interatomic distance becoming closer. Therefore, the friction welded surface 13 can be said to be the shaft part 111 and the second steel material 12 jointed together. As explained above, the shape of the friction welded surface 13 is determined in accordance with the front end shape of the shaft part of the first steel material 11 before pressure welding and is not particularly limited.

### Plastically Deformed Part 14

The plastically deformed part 14 is formed by the plastic deformation of the second steel material 12 occurring at the time of pressure welding. Note that, the front end of the shaft part 111 often also plastically deforms. However, the plastically deformed part of the front end of the shaft part 111 is clearly differentiated from the plastically deformed part 14 of the second steel material 12 through the friction welded surface 13.

### Extruded Part 141

The extruded part 141 of the plastically deformed part 14 is formed by the steel pushed out from the recessed part formed at the second steel material 12 by the press-fitting of the shaft part 111. For this reason, the extruded part 141 of the plastically deformed part 14 is formed so as to project out radially from the second steel material 12 at the surroundings of the recessed part (that is, surroundings of friction welded surface 13).

In a normal joint, the base part of the extruded part 141 is the location forming the starting point of crack occurring after friction welding. In a normal joint, the reason why the base part of the extruded part 141 acts as a starting point of occurrence of crack is believed to lie in the following two points.

First, the base part of the extruded part 141 is a location where stress easily concentrates. The expansion and contraction of a member occurring due to the temperature changes at the time of friction welding cause strain at the member. The stress caused by this strain is believed to concentrate at the base part of the extruded part 141 after the friction welding.

Further, the base part of the extruded part 141 is a location which once becomes a high temperature due to the heat of friction at the time of friction welding, then is rapidly cooled. By going through such a heat history, in a normal joint, the base part of the extruded part 141 is at least partially hardened. Furthermore, the second steel material 12 has an amount of carbon at the inside from the surface by 0.2 mm or more of 0.25 mass% or more and is extremely high in hardenability. For this reason, in a normal joint, the base part of the extruded part 141 is made higher in hardness due to the friction welding. A steel material having a high hardness is extremely high in susceptibility to hydrogen embrittlement, therefore it is surmised that hydrogen embrittlement occurs at the base part of the extruded part 141 of a normal joint. Note that, when the inventors investigated the crack of the joint, they learned that the crack at the base part of the extruded part 141 advanced along the grain boundaries. This suggests the possibility of the crack being caused by hydrogen embrittlement. In the field of art of welding, low temperature cracks caused by diffusive hydrogen sometimes becomes a problem. At the base part of the extruded part 141 formed at the time of friction welding as well, there is a possibility of hydrogen embrittlement cracking occurring by a similar mechanism as low temperature cracks.

In the joint according to the present embodiment, to avoid hydrogen embrittlement, the Vickers hardness at the base part of the extruded part 141 is prescribed as being 600 HV or less. There is a positive correlation between the susceptibility of a steel material to hydrogen embrittlement and the hardness of the steel material. Therefore, by making the hardness of the base part of the extruded part 141 decrease, it is possible to make the susceptibility of the base part of the extruded part 141 to hydrogen embrittlement decrease and keep crack from occurring. The smaller the Vickers hardness of the base part of the extruded part 141 the more preferable. For example, it may be made 590 HV or less, 580 HV or less, 560 HV or less, or 550 HV or less. The lower limit value of the Vickers hardness of the base part of the extruded part 141 is not particularly prescribed. On the other hand, the Vickers hardness of the inside part of the second steel material is preferably made high since it improves the strength of the member including the jointed part. That is, it is preferable to make the difference in hardness between the inside part and surface layer of the second steel material large. For example, the Vickers hardness of the surface layer of the second steel material 12 may be made 15% or more, 17% or more, or 20% or more lower than the Vickers hardness of the inside part.

The means for making the Vickers hardness of the base part of the extruded part 141 decrease is not particularly limited. For example, it is also possible to temper the joint right after the end of the friction welding. In this case, the Vickers hardness of the second steel material 12 as a whole, including the plastically deformed part 14 and the base part of the extruded part 141, is made 600 HV or less. However, to temper the joint as a whole to thereby prevent occurrence of crack at the base part of the extruded part 141, it is necessary to make the Vickers hardness decrease before the occurrence of crack, so it is believed necessary to perform the tempering right after the end of the friction welding resulting in the manufacturing facility of the joint becoming extremely large in size and complicated. Further, if ending up tempering the joint as a whole right after the end of the friction welding, the base material part not affected by the heat of the friction welding also becomes tempered and the characteristics of the base material become damaged over a broad region, so this is not preferred.

One example of a suitable means for making the Vickers hardness of the base part of the extruded part 141 decrease discovered by the inventors is decarburization of the surface of the second steel material 12. If treating the second steel material 12 to decarburize it before being used for the friction welding, the surface layer of the second steel material 12 is decarburized and softened. Next, if friction welding the shaft part 111 and the surface-decarburized second steel material 12, a plastically deformed part 14 having a extruded part 141 is formed at the second steel material 12. The base part of the extruded part 141 is mainly formed by plastic deformation of the decarburized layer of the second steel material 12. Therefore, the base part of the extruded part 141 of the plastically deformed part 14 becomes comprised of decarburized low hardenability steel, a rise in hardness due to the heat of friction at the time of friction welding is suppressed, and the Vickers hardness becomes 600 HV or less.

The second steel material 12 of the joint 1 softened at the base part of the extruded part 141 by the decarburization treatment of the second steel material 12 has a soft part which is decarburized (so long as the joint 1 as a whole is not heat treated after friction welding) and has a small hardness due to hardening by the heat of friction plus a hard part which is not decarburized and has a large hardness due to hardening by the heat of friction. Specifically, the second steel material 12 of the joint 1 softened at the base part of the extruded part 141 by the decarburization treatment has a portion with a Vickers hardness of 896C³ -2232C² +2175C+138 (HV) or more, when an amount of carbon at an inside from the surface by 0.2 mm or more is "C" (mass%), in the vicinity of the friction welded surface 13 in the depth direction. The reason is that, in the vicinity of the friction welded surface 13 in the depth direction, there is necessarily also a part which is hardened by the heat of friction in the state where the decarburized layer is removed by plastic deformation (that is, in a state not affected by decarburization treatment). For example, it is surmised that there is substantially no decarburized layer present in the vicinity of the center of the friction welded surface 13. Further, the presence of a hard part shows that the joint 1 as a whole has not been tempered after friction welding.

By treating the second steel material to decarburize it before the friction welding, the base part of the extruded part 141 of the joint becomes lower in amount of carbon compared with the amount of carbon at the inside part of the second steel material, so it softens. In this case, the decarburization is preferably performed so that the maximum value of the amount of carbon at the region from the surface of the second steel material down to a depth of 45 µm (this region referred to as the "surface layer" in this Description) becomes less than 0.25 mass%. That is, it is preferable that after friction welding, the maximum value of the amount of carbon at a region from the surface down to a depth of 45 µm become less than 0.25 mass% at a position of the second steel material 12 at the joint away from the friction welded surface. This means that the difference of the amount of carbon between the inside part and surface layer of the second steel material 12 should be enlarged. By making the inside part of the second steel material 12 a high amount of carbon, the strength of the joint 1 is improved much more. Therefore, by making the difference of the amount of carbon between the inside part and surface layer of the second steel material 12 greater, it is possible to achieve both an improvement in the joint strength and suppression of occurrence of crack. The maximum value of the amount of carbon at the region from the surface of the second steel material 12 down to a depth of 45 µm may also be 0.22 mass% or less, 0.20 mass% or less, or 0.15 mass% or less.

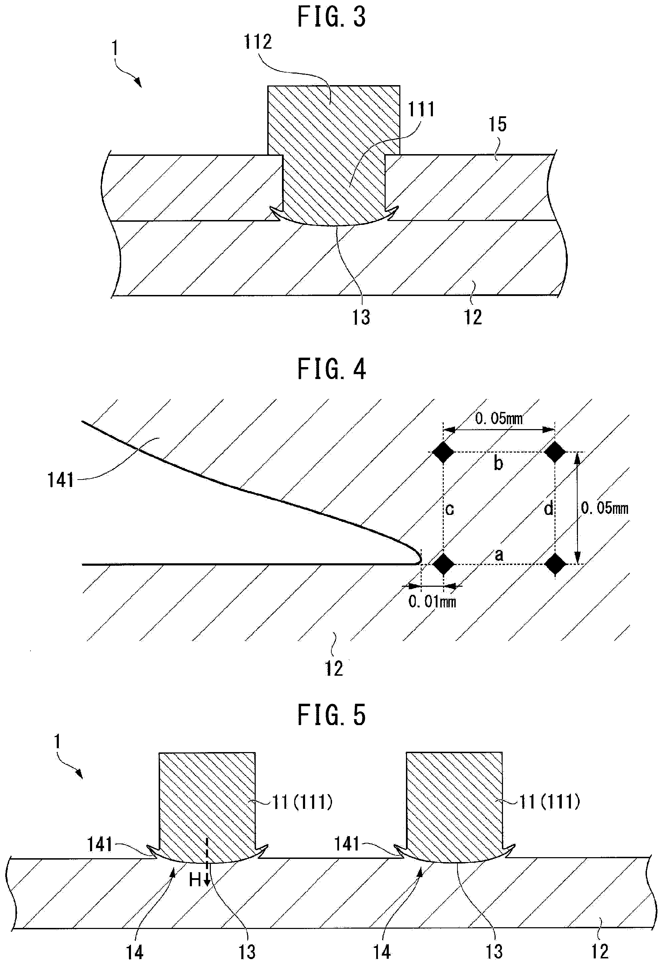

The joint 1 may also be provided with a third member 15 in addition to the above-mentioned members. For example, as shown in FIG. 3, the first steel material 11 may be made a shape having a shaft part 111 and head part 112 like a rivet, the shaft part 111 may be passed through the third member 15, and the third member 15 may be gripped between the head part 112 and the joining surface of the second steel material 12 (surface friction welded with first steel material 11). In this case, the second steel material 12 and third member 15 are preferably closely jointed using the first steel material 11. There is nothing stopping the joint 1 further having another member.

The shape of the third member 15 is not particularly limited. For example, if making both of the second steel material 12 and third member 15 sheets, the joint 1 according to the present embodiment can be applied to a machine part formed by joining the sheets (for example, an automobile member), so this is preferable. The third member 15 may also be a plurality of sheet members.

The third member 15 is one having a hole through which the shaft part 111 is passed. The hole may be provided in the third member 15 in advance before making the shaft part 111 pass through it or may be formed by pressing a high speed rotating shaft part 111 against the third member 15. The shape of the hole is not particularly limited. To use the head part 112 to fasten the third member 15, it is sufficient to make the diameter of the through hole smaller than the diameter of the head part 112.

The method of measurement of the Vickers hardness of the base part of the extruded part 141 is as follows: The joint 1 is cut along a plane vertical to the friction welded surface 13 and including the center of the friction welded surface 13, in other words, a plane parallel to the axial direction of the shaft part 111 and including the center axis of the shaft part 111. This cut surface is examined under a microscope and the base part of the extruded part 141 is identified. The base part of the extruded part 141 is the intersection of the outer edge of the extruded part 141 and the surface of the second steel material 12 and its vicinity. Further, the Vickers hardnesses were measured by a measurement load of 25 gf at four locations of the base part of the extruded part 141 at the second steel material 12 and the average value was calculated to thereby obtain the Vickers hardness of the base part of the extruded part 141. The four locations of the base part of the extruded part 141 at the second steel material 12, as shown in FIG. 4, are the four vertexes of a square of lengths of sides of 0.05 mm formed by
(A) a virtual line "a" along the surface of the second steel material 12,
(B) a virtual line "b" parallel to the virtual line "a" and separated from the surface of the second steel material 12 by 0.05 mm,
(C) a virtual line "c" vertical to the virtual line "a" and separated from the intersection at the base part of the extruded part 141 by 0.01 mm, and
(D) a virtual line "d" vertical to the virtual line "a" and separated from the intersection at the base part of the extruded part 141 by 0.06 mm.

The amount of carbon at the second steel material at an inside from the surface by 0.2 mm or more can be obtained by filing down the surface of the second steel material by 0.2 mm or more by a file etc., then analyzing the steel sheet constituents. Further, the amount of carbon at the surface layer of the steel sheet, that is, the maximum value of the amount of carbon at the region from the surface to a depth of 45 µm, can be obtained by using glow discharge optical emission spectrometry to analyze the distribution of amount of carbon in the depth direction from the steel sheet surface.

The method of measurement of the Vickers hardnesses of the surface layer and inside part of the second steel material 12 is as follows: The second steel material 12 is cut vertical to its surface. The Vickers hardnesses were measured by a measurement load of 25 gf at five locations a depth of 0.02 mm from the surface of the steel material at this cut surface and the average value was calculated to thereby obtain the Vickers hardness of the surface layer of the second steel material 12. Further, the Vickers hardnesses were measured by a measurement load of 25 gf at five locations of a depth of 0.2 mm from the surface of the steel material at this cut surface and the average value was calculated to thereby obtain the Vickers hardness of the inside part of the second steel material 12. The Vickers hardnesses of the surface layer and inside part of the second steel material 12 can be measured at locations in the vicinity of the jointed part after joining not affected by the heat of hardening by the friction welding or tempering.

One example of the method of detection of a hard part in the vicinity of the friction welded surface in the depth direction is as explained below. The joint 1 is cut along a plane vertical to the friction welded surface 13 and including the center of the friction welded surface 13 (in other words, parallel to the axial direction of the shaft part 111 and including the center axis of the shaft part 111). Next, using a measurement load of 100 gf, the Vickers hardness of the cut surface is successively measured along the direction vertical to the friction welded surface 13 passing through the center of the friction welded surface 13 (in other words, the direction parallel to the axial direction of the shaft part 111 passing through the center axis of the shaft part 111). In the successive measurements, it is judged that there is a hard part present if a measurement value is observed giving a Vickers hardness of 896C³ -2232C² +2175C+138 (HV) or more (note that amount of carbon of the second steel material at an inside from the surface by 0.2 mm or more is defined as "C" (mass%)). For example, it may be made 30 to 100 µm in range. If the measurement interval is too short, the result of measurement of hardness at a certain point will be affected by indentation marks formed in the measurement of other points and the precision of measurement will be adversely affected. On the other hand, if the measurement interval is too long, sometimes a hard part will not be able to be detected. Note that, the measurement locations are not limited to the above. A location where a hard part was considered to most easily form was illustrated in the above explanation of the method of measurement, but the joint is judged to be one having a hard part even if detecting a hard part at another location of the jointed part. Further, if hardening the jointed part as a whole after joining, sometimes the hard part in the vicinity of the friction welded surface 13 in the depth direction and the second steel material 12 are integrally formed. In this case as well, the joint 1 is judged to be one having a hard part. If the surface layer of the second steel material 12 is decarburized, even if the jointed part as a whole is hardened, since the base part of the extruded part 141 is comprised of decarburized steel, the Vickers hardness becomes 600 HV or less.

Regarding the method of detection of a hard part, the case where the shaft part 111 of the first steel material 11 is a hollow structure will be explained using FIG. 5. First, the joint 1 is cut along a plane vertical to the friction welded surface 13 (in other words, parallel to the axial direction of the shaft part 111) and including the center axis of the shaft part 111. In the same way as the case where the shaft part is a solid structure, using a measurement load of 100 gf, the Vickers hardness of the cut surface is successively measured in the depth direction of the second steel material along a direction vertical to the friction welded surface (in other words, direction parallel to the axial direction of the shaft part 111) passing through the center of either of two locations of the friction welded part examined in the cross-section (H in FIG. 5).

Next, an automobile member according to another aspect of the present invention will be explained below. The automobile member according to the present embodiment has the joint according to the present embodiment. Due to this, the automobile member according to the present embodiment has a high strength and can keep crack from occurring in the vicinity of the friction welded surface of that jointed part.

Next, a method of manufacture of a joint according to another aspect of the present invention will be explained. The method of manufacture of a joint according to the present embodiment is provided with a step of decarburizing a surface layer of a second steel material with an amount of carbon at an inside from the surface by 0.2 mm or more of 0.25 mass% or more and a step of pressing a shaft part of a first steel material against the decarburized second steel material while making the first steel material rotate so as to form a friction welded surface.

### Decarburization

First, the surface layer of the second steel material with an amount of carbon at the inside from the surface by 0.2 mm or more of 0.25 mass% or more is treated to decarburize it. The conditions of the decarburization are not particularly limited. They may be suitably selected in accordance with the amount of plastic deformation of the surface layer of the second steel material by the first steel material etc. For example, it is preferable to make the decarburization conditions ones holding the steel material in an environment of a dew point of -10°C and temperature of 750°C for 10 minutes, then air-cooling. Further, if control of the structure at the inside part of the second steel material is necessary in accordance with the application of the joint, it is possible to obtain the desired internal structure in the state of a low amount of carbon of the surface layer if performing control of the structure by heat treatment etc. after the decarburization treatment. Further, it is also possible to perform the desired control of the internal structure and decarburization simultaneously by controlling the structure in a temperature region or atmosphere where decarburization occurs.

### Friction Welding

Next, the shaft part of the first steel material is pressed against the decarburized second steel material while making the first steel material rotate (usually rotate centered about the center axis of the shaft part of the first steel material) to form the friction welded surface. By friction welding the second steel material having a decarburized layer, the amount of carbon of the base part of the extruded part formed by the friction welding is made to decrease and the hardenability of the base part can be made to decrease. The conditions of the friction welding are not particularly limited. They may be suitably selected in accordance with the shapes of the first steel material and second steel material etc. For example, if utilizing rotation of a shaft part 111 with a diameter of less than 30 mm to perform friction welding, the rotational speed of the shaft part 111 may be made 1000 to 8000 rpm and the pressing force when pressing the shaft part 111 against the second steel material 12 may be made 5 kN or more.

If utilizing rotation of the shaft part 111 to perform the friction welding, the shape of the front end of the shaft part 111 before the friction welding is preferably, for example, a conical shape, pyramidal shape, or partially spherical shape. The vertex of the front end of the shaft part 111 is preferably on the center axis of the shaft part 111.

The method of manufacture of a joint may further be provided with a step of superposing a third member on a decarburized second steel material before forming a friction welded surface and a step of passing a shaft part of the first steel material through the third member. The first steel material need only have a head part with a cross-sectional diameter (that is, the maximum width at the cross-section vertical to the axial direction) larger than the shaft part. Due to this, it is possible to manufacture a joint 1 having a constitution where the third steel material is gripped between the head part of the first steel material and the joining surface of the second steel material.

The means for making the shaft part 111 pass through the third member 15 is not particularly limited. For example, if the hardness of the third member 15 is much softer than the shaft part 111, it is possible to make the shaft part 111 rotate at a high speed while pressing it against the third member 15 to thereby make it easily pass through the third member 15. For example, if the first steel material 11 is a high strength steel material and the third member 15 is a light metal or soft steel with a thin thickness, the above-mentioned inserting means can be utilized. The above-mentioned inserting means is preferable in terms of the efficiency of the joining work since the insertion and friction welding are consecutively performed.

On the other hand, the third member 15 may be provided in advance with a through hole and the shaft part 111 may also be made to pass through the through hole. The diameter of the through hole is preferably larger than the diameter of the shaft part 111. However, if suitably selecting the material grade and the rotational speed of the shaft part 111 etc., even if the diameter of the through hole is smaller than the diameter of the shaft part 111, it is possible to make the shaft part 111 pass through the third member 15. On the other hand, to use the head part 112 to fasten the third member 15, it is demanded that the diameter of the through hole be made smaller than the diameter of the head part 112.

Note that, the above-mentioned method of manufacture of a joint is just one example of the method of manufacture of a welded joint 1 according to the present embodiment explained above. In the above-mentioned method of manufacture, decarburization was used to achieve softening of the base part of the extruded part, but there is nothing stopping using another method. For example, as explained above, softening of the base part of the extruded part can be achieved even by tempering the joint right after friction welding. Further, softening of the base part of the extruded part can be achieved even by making the second steel material 12 a clad steel comprised of a steel material with an amount of carbon of 0.25 mass% or more and a low carbon steel material bonded together. At this time, the thickness of the low carbon steel material after bonding the two is made 45 µm or more.

### EXAMPLES

Various friction joints were prepared under the following conditions. For the second steel materials, ones with various internal Vickers hardnesses were prepared by presence/absence of decarburization, hardening before joining, tempering, or hardening and tempering treatment. In one of the examples, tempering was performed by furnace heating right after joining (Example No. 3).

**[Table 1]**

| | | |
|---|---|---|
| First steel material | Shape | Steel rod (diameter 4.5 mm) |
| | Strength class | 1000 MPa class |
| Second steel material | Shape | Steel sheet (sheet thickness 1.6 mm) |
| | Amount of carbon inside from surface by 0.2 mm or more (amount of carbon inside steel material) | Described in Table 2 |
| | Decarburization conditions if decarburizing | Dew point of -10°C, holding at temperature 750 to 900°C for 0.20 to 10 minutes, then air-cooling |
| Conditions of friction welding | Rotational speed | 6000 rpm |
| | Pressing force | 7000N |
| | Upset length | 2.5 mm |

The prepared friction joints were cut along planes vertical to the friction welded surfaces passing through the centers of the friction welded surfaces (in other words, planes parallel to the axial directions of the shaft parts passing through the center axes of the shaft parts) and examined in cut surfaces to check for the presence of crack. Further, at the cut surfaces, the hardnesses of the base parts of the extruded parts of the second steel materials were measured.

The methods of measurement of the maximum value of the amount of carbon in the region the second steel material 12 from the surface down to 45 µm and the amount of carbon at the inside part were as follows: For the amount of carbon at the surface layer of the steel sheet, glow discharge optical emission spectrometry was used to analyze the distribution of amount of carbon in the depth direction from the steel sheet surface. The amount of carbon at the inside part of the second steel material was measured by filing off the surface of the second steel material by 0.2 mm or more using a file etc., then analyzing the steel sheet constituents. Further, if the amount of carbon at the inside part of the second steel material was 0.25 mass% or more and the result of analysis from the surface down to 45 µm was that the amount of carbon was less than 0.25 mass% at all depths, it was judged that there was an effective decarburized layer. Further, if the result of analysis from the surface down to 45 µm was that the amount of carbon was 0.25 mass% or more at any depth, it was judged that there was no effective decarburized layer.

The Vickers hardness of the surface layer of the second steel material 12 was measured by cutting the second steel material 12 vertical to its surface, measuring the Vickers hardnesses at five locations of depths of 0.02 mm from the surface of the steel material at that cut surface by a measurement load of 25 gf, and calculating the average value. Further, the Vickers hardness of the inside part of the second steel material 12 was measured by measuring the Vickers hardnesses at five locations of depths of 0.2 mm from the surface of the steel material at that cut surface by a measurement load of 25 gf and calculating the average value. The Vickers hardnesses of the surface layer and inside part of the second steel material 12 were measured at locations sufficiently separated from the jointed part and not affected by heat such as hardening due to friction welding or tempering.

The method of measurement of the Vickers hardness of the base part of the extruded part 141 was as follows: The joint 1 was cut along a plane vertical to the friction welded surface 13 and including a center of the friction welded surface 13, in other words, a plane parallel to the axial direction of the shaft part 111 and including the center axis of the shaft part 111. This cut surface was examined under a microscope and the base part of the extruded part 141 was identified. Further, at four locations in the vicinity of the base part of the extruded part 141 at the second steel material 12, the Vickers hardnesses were measured by a measurement load of 25 gf. The average value was calculated to obtain the Vickers hardness of the base part of the extruded part 141. The "four locations" in the vicinity of the base part of the extruded part 141 at the second steel material 12 are the four vertexes of a square shape of lengths of sides of 0.05 mm defined by the above-mentioned virtual lines "a" to "d". If the cracks overlap with measurement locations and measurement of the Vickers hardness is difficult, several parts of jointed part are examined in cross-section by the above method under the same conditions, a cross-section where the cracks do not overlap the four measurement locations is obtained, then the Vickers hardness was measured. Cases where the Vickers hardness of the base part of the extruded part 141 was 600 HV or less are invention examples.

Furthermore, a hard part in the vicinity of the friction welded surface in the depth direction was detected by the following procedure: The joint 1 was cut along a plane vertical to the friction welded surface 13 and including a center of the friction welded surface 13, that is, a plane parallel to the axial direction of the shaft part 111 and including a center axis of the shaft part 111. Next, along a direction vertical to the friction welded surface 13 passing through the center of the friction welded surface 13, that is, a direction parallel to the axial direction of the shaft part 111 passing through the center axis of the shaft part 111, the Vickers hardness of the cut cross-section was successively measured with a measurement load of 100 gf. In the successive measurement, if a measurement value giving a Vickers hardness of 896C³ -2232C² +2175C+138 (HV) or more (note that the amount of carbon of the second steel material at an inside from the surface by 0.2 mm or more is made "C" (mass%)) is recognized, it is judged there is a hard part present. The measurement interval was made 50 µm.

The results of evaluation are shown in Table 2 and Table 3.

**[Table 2]**

| | Amount of carbon inside of second steel material (mass%) | Maximum value of amount of carbon of second steel material at region from surface to depth of 45 µm (mass%) | Vickers hardness of inside part of second steel material (HV) | Vickers hardness of surface layer of second steel material (HV) | Surface layer HV/inside part HV of second steel material | Presence of effective decarburized layer |
|---|---|---|---|---|---|---|
| 1 | 0.30 | 0.22 | 623 | 503 | 0.81 | Yes |
| 2 | 0.30 | 0.29 | 623 | 629 | 1.01 | No |
| 3 | 0.30 | 0.30 | 431 | 415 | 0.96 | No |
| 4 | 0.35 | 0.05 | 653 | 220 | 0.34 | Yes |
| 5 | 0.35 | 0.10 | 369 | 268 | 0.73 | Yes |
| 6 | 0.35 | 0.24 | 571 | 427 | 0.75 | Yes |
| 7 | 0.35 | 0.27 | 641 | 587 | 0.92 | No |
| 8 | 0.35 | 0.30 | 662 | 618 | 0.93 | No |
| 9 | 0.35 | 0.35 | 353 | 324 | 0.92 | No |
| 10 | 0.35 | 0.22 | 203 | 181 | 0.89 | Yes |
| 11 | 0.45 | 0.16 | 712 | 392 | 0.55 | Yes |
| 12 | 0.45 | 0.21 | 530 | 431 | 0.81 | Yes |
| 13 | 0.45 | 0.32 | 524 | 481 | 0.92 | No |
| 14 | 0.45 | 0.45 | 703 | 698 | 0.99 | No |

**[Table 3]**

| No. | Presence of hard part | Vickers hardness of base part of extruded part (Hv) | Presence of crack | Remark 1 | Remark 2 Heat treatment of second steel material | Remark 3 Heat treatment after joining |
|---|---|---|---|---|---|---|
| 1 | Yes | 390 | No | Inv. ex. | Hardening after decarburization | - |
| 2 | Yes | 630 | Yes | Comp. ex. | Hardening after decarburization | - |
| 3 | No | 392 | No | Inv. ex. | No decarburization | Tempering joint as a whole by furnace heating right after joining |
| 4 | Yes | 280 | No | Inv. ex. | Hardening after decarburization | - |
| 5 | Yes | 367 | No | Inv. ex. | Hardening after decarburization | - |
| 6 | Yes | 551 | No | Inv. ex. | Hardening and tempering after decarburization | - |
| 7 | Yes | 643 | Yes | Comp. ex. | Hardening after decarburization | - |
| 8 | Yes | 634 | Yes | Comp. ex. | Hardening after decarburization | - |
| 9 | Yes | 681 | Yes | Comp. ex. | Tempering without decarburization | - |
| 10 | Yes | 510 | No | Inv. ex. | Tempering after decarburization | - |
| 11 | Yes | 416 | No | Inv. ex. | Hardening after decarburization | - |
| 12 | Yes | 567 | No | Inv. ex. | Hardening and tempering after decarburization | - |
| 13 | Yes | 620 | Yes | Comp. ex. | Hardening and tempering after decarburization | - |
| 14 | Yes | 706 | Yes | Comp. ex. | Hardening without decarburization | - |

Invention Examples 1, 4, 5, 6, 10, 11, and 12 with effective decarburized layers provided at the second steel materials before friction welding had Vickers hardnesses of the base parts of the extruded parts much lower than 600 HV. In Invention Example 3, no effective decarburized layer was provided before the friction welding, but right after friction welding, the joint as a whole was heated in the furnace and tempered so as thereby make the Vickers hardness of the base part of the extruded part fall to 600 HV or less. Further, in these invention examples, crack did not occur. On the other hand, in Comparative Examples 2, 7, 8, 9, 13, and 14 where effective decarburized layers were not provided at the second steel materials, it is not possible to keep the base parts of the extruded parts from hardening and the Vickers hardnesses of the base parts of the extruded part were higher than 600 HV, so crack occurred.

### INDUSTRIAL APPLICABILITY

According to the present invention, it is possible to provide a joint, an automobile member, and a method for manufacture of the joint able to keep cracks from occurring in the vicinity of the friction welded surface. Therefore, the present invention has an extremely high industrial applicability.

### REFERENCE SIGNS LIST

1. joint
11. first steel material
111. shaft part
112. head part
12. second steel material
13. friction welded surface
14. plastic deformed part
141. extruded part
15. third member
2. cracking defect

## Claims

1. A joint comprising
a first steel material having a shaft part,
a second steel material with an amount of carbon at an inside from the surface by 0.2 mm or more of 0.25 mass% or more and having the shaft part press-fit into the second steel material, and
a friction welded surface, the shaft part and the second steel material being jointed via the friction welded surface,
the second steel material having a plastically deformed part contiguous with the friction welded surface,
the plastically deformed part having a projecting part projecting out toward an outside of the second steel material,
a Vickers hardness of a base part of the projecting part, measured at a plane vertical to the friction welded surface and including a center of the friction welded surface, being 600 HV or less.

2. The joint according to claim 1, wherein a cross-section of the shaft part vertical to an axial direction is a rotationally symmetric shape.

3. The joint according to claim 1, wherein a cross-section of the shaft part vertical to an axial direction is a circular shape or a regular polygonal shape.

4. The joint according to any one of claims 1 to 3, wherein the second steel material has a hard part with a Vickers hardness of 896C³ -2232C² +2175C+138 (HV) or more in the vicinity of the friction welded surface in a depth direction, wherein "C" (mass%) means an amount of carbon at 0.2 mm or more inside from the surface.

5. The joint according to any one of claims 1 to 4, wherein a maximum value of an amount of carbon in a region from the surface of the second steel material to a depth of 45 µm is less than 0.25 mass%.

6. The joint according to any one of claims 1 to 5, wherein a Vickers hardness of a surface layer of the second steel material is 15% or more lower than a Vickers hardness of an inside part.

7. The joint according to any one of claims 1 to 6, wherein the second steel material is a steel sheet.

8. The joint according to any one of claims 1 to 7, wherein
the first steel material has a head part with a cross-sectional diameter larger than the shaft part,
the joint further comprises a third member provided between the head part and the second steel material,
the shaft part of the first steel material passes through the third member, and
the third member is gripped between the head part of the first steel material and a joining surface of the second steel material.

9. An automobile member comprising the joint according to any one of claims 1 to 8.

10. A method of production of a joint comprising
a step of decarburizing a surface layer of a second steel material with an amount of carbon at an inside from the surface by 0.2 mm or more of 0.25 mass% or more, and
a step of pressing a shaft part of a first steel material against the decarburized second steel material while making the first steel material rotate so as to form a friction welded surface.

11. The method of production of a joint according to claim 10, wherein
the first steel material has a head part with a cross-sectional diameter larger than the shaft part; and
the method comprises, before forming the friction welded surface,
a step of superposing a third member on the decarburized second steel material and
a step of making the shaft part of the first steel material pass through the third member.
